# EUROPEAN PATENT APPLICATION

(11) **EP 3 435 062 A1**
(43) Date of publication of application: **30.01.2019**
(21) Application number: 17769425.4
(22) Date of filing: 21.03.2017
(51) Int. Cl.: G01N 1/36

(54) **SLIDE FRAME DEVICE FOR SAMPLE SLIDE PROCESSING**

(30) Priority: 21.03.2016 CN 201610160797; 31.08.2016 CN 201610798094
(71) Applicant: Xiamen Talent Biomedical Technology Company, Ltd., Haicang District Xiamen Fujian (CN)
(72) Inventor: GUO, James, Guangzhou Guangdong 511458 (CN); GUO, Derek, Guangzhou Guangdong 511458 (CN)
(74) Representative: Haseltine Lake LLP
(86) International application number: PCT/CN2017/077568
(87) International publication number: WO 2017/162148

(57) **Abstract**

The present invention discloses a slide rack device for slide specimen processing, mainly comprising a cover plate (601), a slide (101), a slide rack (602) and a spring piece (603); the slide rack (602) is provided with a plurality of integrated V-shape insertion slots (604) and a spring piece (603) is fixed inside the V-shape insertion slot (604). The insertion slot is V-shaped and provided upright or inclined, and a plurality of slide assemblies which are assembled by a slide specimen to be tested and the slide cover plate, can be closely placed in the insertion slot, so that space utilization is greatly enhanced. It is easy and convenient to assemble or disassemble the slide assembly from the insertion slot. The slide rack (602) can endure high temperature. When a heat treatment is required in the specimen processing, the slide (101) is inserted in the rack (602) and then a bottom of the slide (101) is immersed in a hot medium for heating. There's no need to take or transfer the slide manually in the whole process of the slide specimen processing.

## Description

### TECHNICAL FIELD

The present invention belongs to a field of biological specimen processing, and specifically relates to a slide rack device for biological slide specimen processing.

### BACKGROUND

The whole process of tests of proteins, pathogens or genes, such as by immunohistochemistry and by in-situ hybridization gene testing, on a slide specimen requires dozens of complicated steps, and accuracy of the test result thereof may be severely affected by various factors such as environment and manual operation. Simplifying an operation process and reducing an influence of environment are of the highest priority to enhance an efficiency and accuracy of specimen testing.

Currently, during the test process, a slide specimen is laid horizontally which takes a rather large space and limits the number and efficiency of the slide specimen processing.

A reagent is dispensed from the above of the slide, which could make a big position error. After adding the reagent, incubation at open may easily lead to a problem of evaporation of the reagent and drying of the specimen.

Usually, the reagent is added by dispensing from the above of the slide, and before dispensing, liquids that previously present on the slide need to be removed and the slide needs to be drained off and wiped. Such operations bring a high degree of manual error, and an amount of the residual liquid may affect a concentration and an efficacy of the reagent in the next step. The process of wiping the slide may also damage the specimen and leads to the drying of specimen that is wiped previously and thus results in a failure of the specimen processing.

During the specimen processing, a majority of specimens require a heat treatment. A majority of specimens require a heat treatment, which is a necessary step to make a characteristic protein of an antigen or the pathogen restore to an original shape, or make gene strands melt. The heating is generally performed at a temperature of 80 - 121°C and maintained for 3 to 60 minutes. The most common methods are as follows: cooking in an autoclave, conventional boiling, cooking in a microwave oven or heating in water bath. However, container or shelf that is used for slide specimen processing in the manual operation at present is neither heat-resisting, nor has a heating function. During the slide specimen processing, the slide specimen needs to be transferred into a heatable container, and then transferred back to a normal-temperature operation desk, increasing the complexity of the operation process and the operation error.

The present invention achieves that in the process of the slide specimen processing, the slide assembly which is assembled by the slide cover plate and the slide, is inserted on the a slide rack and remains still, and there's no need to take or transfer the slide manually during the whole process of the slide specimen processing, simplifying the operation steps of the slide specimen processing and enhancing the efficiency and quality of the slide specimen processing.

### SUMMARY OF THE INVENTION

In order to solve the above problems, the present invention provides a slide rack device for slide specimen processing. A slide assembly formed by that a cover plate fits with a slide is inserted upright or inclined in an insertion slot on the slide rack, so that the slide assembly may be placed closely and space is greatly saved, favorable to a requirement of processing a large amount of specimens. There's one tiny gap at the middle of the slide assembly, and a reagent fills the gap via the effects of gravity and capillary siphoning and covers the specimen on the slide evenly. Regardless of where the specimen is, the specimen may be covered by the reagent. The slide rack device for slide specimen processing of the present invention is made of a high-temperature resisting material. The slide assembly which is inserted on the slide rack may be immersed directly or with the bottom partially inserted in a heating medium for heating. Even if evaporation generates during the heating, solution in a capillary gap may also be immediately replenished by sucking liquid from a gap opening at the bottom of the assembly, without drying of the specimen. In the whole process of the processing, the relative position between the slide cover plate and the slide is held still from the beginning to the end, without separation. There's no need to take or transfer the slide manually during the whole process of the slide specimen processing, and the slide remains always in one same device.

Objectives of the present invention are achieved at least by one of the following technical solutions.

A slide rack device for slide specimen processing, comprises a cover plate, a slide, a slide rack and a spring piece; the slide rack is provided with a plurality of integrated V-shape insertion slots which are upright or inclined, and a spring piece is fixed inside each V-shape insertion slot; and the spring piece is made of a material which is the same as that of the rack, or is made of a sheet metal;
an outline of an upper end of a slide assembly assembled by the slide and the cover plate matches with the V-shape insertion slot on the rack, so that the slide assembly can be inserted in the V-shape insertion slot on the slide rack, and a plurality of slide assemblies are arranged closely;
the spring piece and the V-shape insertion slot of the slide rack are connected in integrity, or are configured as independent separation; when the independent separation is adopted, a spring piece plate is fixed inside the V-shape insertion slot by means of embedding or adhesion; when the slide assembly is inserted in the V-shape insertion slot, a surface of the cover plate presses the spring piece, and the spring piece plays a function of clamping the slide and the slide cover plate.

Further preferably, the slide rack is made of a heat-resisting material and can endure a heat treatment process during a slide specimen testing.

Further preferably, a plurality of V-shape insertion slots are arranged closely in one column, and the slide rack comprises single-column or multi-column V-shape insertion slots. A slide rack having single-column insertion slots or a slide rack having multi-column insertion slots is formed.

Further preferably, multi-column V-shape insertion slots are placed in parallel and an insertion slot rack for slides, with several rows and several columns, is formed.

Further preferably, the slide cover plate comprises a capillary plane, a depth locating face, a width locating block, a bottom locating block, a reservoir side face and a reservoir opening face;
two depth locating faces are provided above two lateral sides facing toward each other of the capillary plane, and the capillary plane is parallel to the depth locating faces; portions of a plane of the slide which are close to edges of two sides are attached to the depth locating faces, so that a capillary gap is formed between a slide surface and the capillary plane; one or more width locating blocks are provided at an outer edge of each depth locating face which is far away from the capillary plane; a vertical distance between the width locating blocks located on different depth locating faces matches to a width of the slide to play a stopping function; the bottom locating block is provided at a bottom of the depth locating face;
the reservoir opening face is connected with an upper end of the capillary plane and forms an angle A1, and A1 is a plane angle of 1 ° to 175°; two sides of the reservoir opening face are each connected with one reservoir side face; the reservoir opening face and two reservoir side faces and a slide plane together constitute one reagent loading reservoir which is connected with the capillary gap, and a bottom of the capillary gap has a gap opening. A length of the slide cover plate corresponds to or is equal to that of the slide, one label dent is provided on each side of the reservoir side face which is attached to the slide plane, that is, upper ends of the two depth locating faces are each provided with one label dent, and when a label is stuck to the slide, the label dent provides enough space for containing a thickness of the label, enabling the slide cover plate to be pressed tight against the slide without being affected by whether the label is stuck to the slide.

Further preferably, outer sides of the two reservoir side faces are provided with top stripes for enhancing a friction between the reservoir side face and a finger.

Further preferably, a vertical distance between the capillary plane and the depth locating face is 0.01 to 0.5 mm, so that after the slide cover plate is pressed tight against the slide, one capillary gap having a spacing of 0.01 to 0.5mm is formed between the slide surface and the capillary plane; and a thickness of the width locating block that is higher beyond the depth locating face is 0.1 to 1 mm.

Further preferably, the bottom locating block is upward hook-like, and the bottom locating block and the width locating block together determine a relative position after the cover plate is pressed against the slide, and assist keeping the cover plate being pressed tight against the slide.

Further, a bottom of the capillary plane is further provided with two guiding angles; one funnel-type guiding opening is formed between the two guiding angles, and allows solution in the capillary plane to flow out of the guiding opening; and a height of the guiding angle relative to the capillary plane is aligned to the depth locating face.

Further preferably, the slide rack may be placed closely in parallel, and a slide rack device having multi-row and multi-column insertion slots is formed, in which the slide assemblies in single-row or multi-row and in single-column or multi-column may be inserted.

Further preferably, the slide rack device is made of a material which endures a temperature of 80°C or above, such as polycarbonate.

Compared with the prior art, the present invention has following advantages and technical effects:
The slide rack device of the present invention has a simpler structure and lower cost, a plurality of slide assemblies can be inserted more closely. A slide assembly that can be inserted with several rows and several columns is formed, with a tight structure, taking less space and processing a large amount of slide specimens. Columns can be configured independently of each other or in integrity, and an arrangement configuration in single-row or multi-row and in single-column or multi-column is formed and inserted with a large amount of slide specimens to be tested. The slide is placed inclined or upright to save the space. It is simple and convenient to assemble or disassemble the slide and the cover plate from the slot. The insertion slot device has a heat resistance. When the slide specimen requires a heat treatment, there's no need to remove the slide, and the slide can remain in the insertion slot on the slide rack for the heat treatment. There's no need to take or transfer the slide manually during the whole process of the slide specimen processing.

### BRIEF DESCRIPTION OF THE DRAWINGS

FIG. 1 shows a diagram of a slide rack device in an embodiment.
FIG. 2 shows a diagram of a slide rack device providing with a plurality of insertion slots in an embodiment.
FIG. 3 shows a diagram of a slide rack inserted with slide assemblies in an embodiment.
FIG. 4 shows a structural diagram of a slide cover plate in an embodiment.
FIG. 5 shows a diagram of a slide assembly which is assembled by the slide cover plate and the slide in an embodiment.
FIG. 6a shows a front projection of FIG. 5.
FIG. 6b shows a side view of FIG. 5.
FIG. 6c shows a partial enlarged view of FIG. 5.

### DETAILED DESCRIPTION OF THE PREFERRED EMBODIMENT

The present invention is further described below in combination with specific embodiments, but implementations and protection of the present invention are not limited by these.

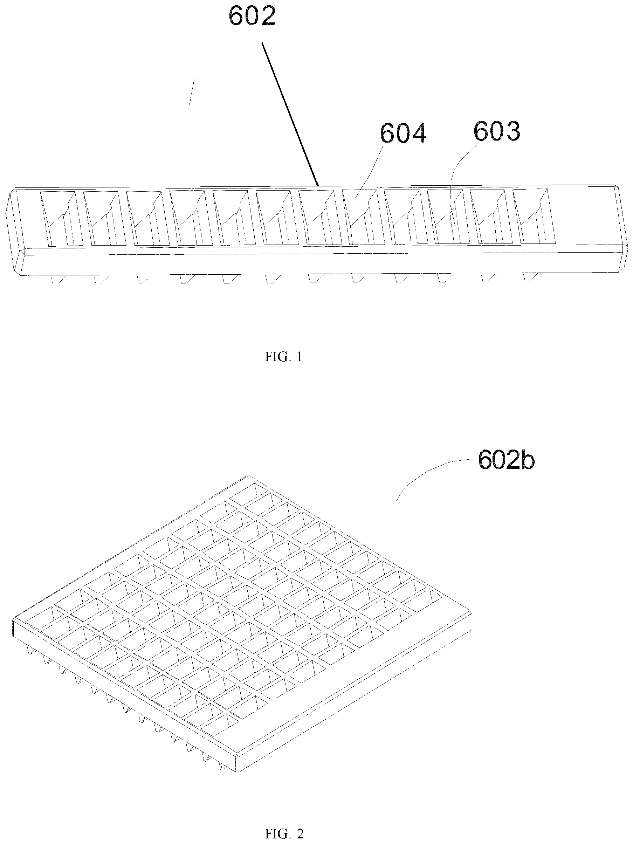

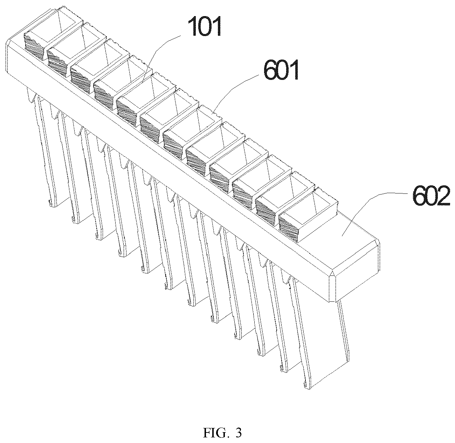

As shown in FIGs. 1 to 3, a slide rack device for slide specimen processing, mainly comprises a cover plate 601, a slide 101, a slide rack 602 and a spring piece 603; the slide rack 602 is provided with a plurality of integrated V-shape insertion slots 604 which are configured upright or inclined, and a spring piece 603 which is fixed inside the V-shape insertion slot is made of a material which is the same as that of the rack, or is made of a sheet metal; and the slide rack 602 is made of a heat-resisting material (such as polycarbonate).

An outline of an upper end of a slide assembly assembled by the slide 101 and the cover plate 601 matches with the V-shape insertion slot 604 on the rack, so that the slide assembly can be inserted in the V-shape insertion slot 603 on the slide rack 602, and a plurality of slide assemblies are arranged closely. The V-shape insertion slot is provided upright or inclined with an angle of 1° to 90°. The V-shape insertion slots are arranged in single-row or multi-row and in single-column or multi-column. The arranged number of rows and number of columns can be provided according to the requirement of an amount of specimens to be tested. The slide assembly which is assembled by the slide and the slide cover plate can be inserted inclined or upright in the V-shape insertion slot, with an angle of 1° to 90°.

A plurality of V-shape insertion slots are arranged closely in one column, and the slide rack 602 comprises single-column or multi-column V-shape insertion slots. A slide slot rack 602 having single-column insertion slots or a slide slot rack 602b having multi-column insertion slots is formed, as shown in FIG. 2.

As an embodiment, the spring piece 603 in the insertion slot can be made of plastic, sheet copper, sheet spring steel or other elastic materials. The assembly made by the slide 101 fitting with the cover plate 601 is inserted along the V-shape insertion slot of the rack. A surface (back) of the cover plate 601 presses the spring piece 603, and a spring pressure generated is applied on the slide 101 and the cover plate 601 to clamping the both.

As another embodiment, the slide cover plate can be shorter than the slide. Space for sticking a label or identifying a label is provided at an upper end of the slide 101.

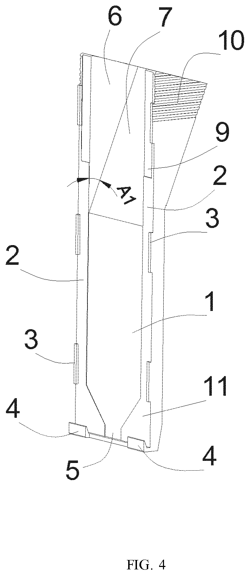

As an optimized embodiment which is more suitable for the design of the present invention, a length of the slide cover plate corresponds to that of the slide, but a label dent 9 is provided on the slide cover plate. When the label is stuck to the slide, attachment between the slide cover plate and the slide 101 is still not affected. As shown in FIG. 4, the cover plate can be further optimized and improved. For example, as a preferable embodiment, a bottom locating block 4 of the cover plate is optimized as a locating hook (hook like), which provides a locating function and assists a plate-type spring to clamp the cover plate and the slide, guaranteeing an accuracy of a capillary gap.

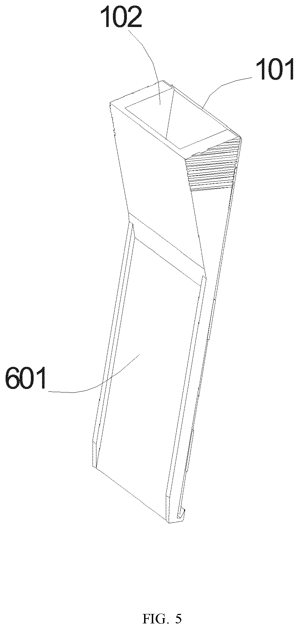

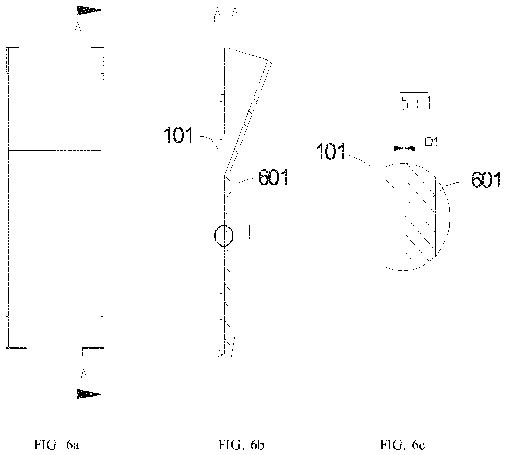

As shown in FIGs. 4, 5 and 6a to 6b, the slide cover plate comprises a capillary plane 1, a depth locating face 2, a width locating block 3, a bottom locating block 4, a reservoir side face 6 and a reservoir opening face 7; two depth locating faces 2 are provided above two lateral sides facing toward each other of the capillary plane 1, and the capillary plane 1 is parallel to the depth locating faces; portions of a plane of the slide which are close to edges of two sides are attached to the depth locating faces 2, so that a capillary gap is formed between a slide surface and the capillary plane 1; one or more width locating blocks 3 are provided at an outer edge of each depth locating face 2 which is far away from the capillary plane 1; a vertical distance between the width locating blocks 3 located on different depth locating faces 2 matches to a width of the slide to play a stopping function; the bottom locating block 4 is provided at a bottom of the depth locating face 2; the reservoir opening face 7 is connected with an upper end of the capillary plane 1 and forms an angle A1, and A1 is a plane angle of 1° to 175°; two sides of the reservoir opening face 7 are each connected with one reservoir side face 6; and the reservoir opening face 7 and two reservoir side faces 6 and a slide plane together constitute one reagent loading reservoir which is connected with the capillary gap. A bottom of the capillary plane 1 is further provided with two guiding angles 11; and one funnel-type guiding opening 5 is formed between the two guiding angles, and allows solution in the capillary plane to flow out of the guiding opening.

As further optimized implementation, a length of the slide cover plate corresponds to or is equal to that of the slide, one label dent 9 is provided on each side of the reservoir side face 6 which is attached to the slide plane, that is, upper ends of the two depth locating faces 2 are each provided with one label dent 9, and when the label is stuck to the slide, the label dent provides enough space for containing a thickness of the label, enabling the slide cover plate to be pressed tight against the slide without being affected by whether the label is stuck to the slide. Outer sides of the two reservoir side faces 6 are provided with top stripes 10 for enhancing a friction between the reservoir side face 6 and the finger.

A vertical distance between the capillary plane 1 and the depth locating face 2 is 0.01 to 0.5 mm, so that after the slide cover plate is pressed tight against the slide, one capillary gap having a spacing of 0.01 to 0.5mm is formed between the slide surface and the capillary plane 1; and a thickness of the width locating block 3 that is higher beyond the depth locating face 2 is 0.1 to 1 mm. The bottom locating block 4 is upward hook-like, and the bottom locating block 4 and the width locating block 3 together determine a relative position after the cover plate is pressed against the slide, and assist keeping the cover plate being pressed tight against the slide. A bottom of the capillary plane 1 is further provided with two guiding angles 11; one funnel-type guiding opening 5 is formed between the two guiding angles, and allows solution in the capillary plane to flow out of the guiding opening; and a height of the guiding angle 11 relative to the capillary plane is aligned to the depth locating face 2.

The V-shape insertion slot structurally fits with the slide assembly, and the rack device has a simpler structure. When in use, it only requires the fingers to clamp the top stripes portions of two reservoir side faces and the slide, so that it is easy to insert the slide assembly into the insertion slot. Uneven stressing generating when a top end of the slide is pressed and separation of the slide from the slide cover plate owing to deviation of a stressing direction are prevented, guaranteeing the formation and accuracy of the capillary gap and making the operation simpler and faster. Besides, arrangement of the slide assemblies can be tighter, which further saves space and enhances a processing efficiency.

Embodiment: the slide cover plate has a dimension as follows: a length of the depth locating face 2 is 75 mm, a distance between inner sides of two width locating blocks 3 is 28 mm, D1 = 0.2 mm, D2 = 0.5 mm; the capillary plane has a length of 50 mm and a width of 20 mm; the label dent has a depth of 0.2 mm and a length of 25 mm; and an inclined angle (A1) between the reservoir opening face and the depth locating face is 30°. The slide has a length of 75 mm, a width of 25 mm and a thickness of 1 mm. A biological specimen on the slide has a thickness of 0.01 mm. The V-shape insertion slot is inclined by 75°. The slide rack device is made of a material which endures a temperature of 80°C or above, such as polycarbonate. It is indicated from the experiment that the insertion slot can be closely inserted with a plurality of slide assemblies containing specimen to be tested; fitting between the slide and the cover plate was tight and accurate; it is simple and convenient to assemble or disassemble the slide and the cover plate from the V-shape insertion slot; and the slide assembly which was inserted in the V-shape insertion slot of the slide rack device can be heated in a container filled with liquid, while liquid in the capillary gap was without bubble accumulation or drying. A good staining effect was achieved in an immunohistochemical specimen staining test.

According to the disclosure and teaching of the above description, those skilled in the art of the present invention may further modify and alter the above implementations. Therefore, the present invention is not limited by the above disclosure and the described specific implementations, and some alteration and modification of the present invention shall also fall into the scope of protection as claimed by the claims of the present invention.

## Claims

1. A slide rack device for slide specimen processing, **characterized in that**, the slide rack device comprises a cover plate (601), a slide (101), a slide rack (602) and a spring piece (603); the slide rack (602) is provided with a plurality of integrated V-shape insertion slots (604) which are upright or inclined, and a spring piece (603) is fixed inside each V-shape insertion slot; and the spring piece is made of a material which is the same as that of the slide rack, or is made of a sheet metal;
an outline of an upper end of a slide assembly assembled by the slide (101) and the cover plate (601) matches with the V-shape insertion slot (604) on the rack, so that the slide assembly can be inserted in the V-shape insertion slot (603) on the slide rack (602), and a plurality of slide assemblies are arranged closely;
the spring piece (603) and the V-shape insertion slot (604) of the slide rack can be an integrated connection structure, or can be configured as independent separation; when the independent separation is adopted, a spring piece plate is fixed inside the V-shape insertion slot (604) by means of embedding or adhesion; when the slide assembly is inserted in the V-shape insertion slot (604), a surface of the cover plate (601) presses the spring piece (603), and the spring piece plays a function of clamping the slide (101) and the slide cover plate (601);
a slide cover plate for slide specimen processing, wherein the slide cover plate is used to fit with a rectangular-sheet type specimen slide to assemble a set of slide assembly (103) for specimen processing, **characterized in that**, the slide cover plate comprises a capillary plane (1), a depth locating face (2), a width locating block (3), a bottom locating block (4), a reservoir side face (6) and a reservoir opening face (7).

2. The slide rack device for slide specimen processing according to claim 1, wherein the slide rack (602) is made of a heat-resisting material and can endure a heat treatment process during a slide specimen testing.

3. The slide rack device for slide specimen processing according to claim 1, wherein a plurality of V-shape insertion slots are arranged closely in one column, and the slide rack device comprises single-column or multi-column V-shape insertion slots.

4. The slide rack device for slide specimen processing according to claim 3, wherein multi-column V-shape insertion slots are placed closely in parallel, and an insertion slot rack for slides, with several rows and several columns, is formed.

5. The slide rack device for slide specimen processing according to claim 1, wherein the slide cover plate comprises a capillary plane (1), a depth locating face (2), a width locating block (3), a bottom locating block (4), a reservoir side face (6) and a reservoir opening face (7);
two depth locating faces (2) are provided above two lateral sides facing toward each other of the capillary plane (1), and the capillary plane (1) is parallel to the depth locating faces; portions of a plane of the slide which are close to edges of two sides are attached to the depth locating faces (2), so that a capillary gap is formed between a slide surface and the capillary plane (1); one or more width locating blocks (3) are provided at an outer edge of each depth locating face (2) which is far away from the capillary plane (1); a vertical distance between the width locating blocks (3) located on different depth locating faces (2) matches to a width of the slide to play a stopping function; the bottom locating block (4) is provided at a bottom of the depth locating face (2);
the reservoir opening face (7) is connected with an upper end of the capillary plane (1) and forms an angle A1, and A1 is a plane angle of 1° to 175°; two sides of the reservoir opening face (7) are each connected with one reservoir side face (6); the reservoir opening face (7) and two reservoir side faces (6) and a slide plane together constitute one reagent loading reservoir which is connected with the capillary gap, and a bottom of the capillary gap has a gap opening.

6. The slide rack device for slide specimen processing according to claim 5, wherein a length of the slide cover plate corresponds to or is equal to that of the slide, one label dent (9) is provided on each side of the reservoir side face (6) which is attached to the slide plane, that is, upper ends of the two depth locating faces (2) are each provided with one label dent (9), and when the label is stuck to the slide, the label dent provides enough space for containing a thickness of the label, enabling the slide cover plate to be pressed tight against the slide without being affected by whether the label is stuck to the slide.

7. The slide rack device for slide specimen processing according to claim 5, wherein outer sides of the two reservoir side faces (6) are provided with top stripes (10) for enhancing a friction between the reservoir side face (6) and the finger.

8. The slide rack device for slide specimen processing according to claim 5, wherein a vertical distance between the capillary plane (1) and the depth locating face (2) is 0.01 to 0.5 mm, so that after the slide cover plate is pressed tight against the slide, one capillary gap having a spacing of 0.01 to 0.5mm is formed between the slide surface and the capillary plane (1); and a thickness of the width locating block (3) that is higher beyond the depth locating face (2) is 0.1 to 1 mm.

9. The slide rack device for slide specimen processing according to claim 5, wherein the bottom locating block (4) is upward hook-like, and the bottom locating block (4) and the width locating block (3) together determine a relative position after the cover plate is pressed against the slide, and assist keeping the cover plate being pressed tight against the slide.

10. The slide rack device for slide specimen processing according to claim 5, wherein a bottom of the capillary plane (1) is further provided with two guiding angles (11); one funnel-type guiding opening (5) is formed between the two guiding angles, and allows solution in the capillary plane to flow out of the guiding opening; and a height of the guiding angle (11) relative to the capillary plane is aligned to the depth locating face (2).
